# EUROPÄISCHE PATENTSCHRIFT

(11) **EP 1 121 270 B1**
(45) Veröffentlichungstag und Bekanntmachung des Hinweises auf die Patenterteilung: **05.02.2003**
(21) Anmeldenummer: 99959216.5
(22) Anmeldetag: 09.10.1999
(51) Int. Cl.: B60N 2/64

(54) **SITZVORRICHTUNG**
SEAT
SIEGE

(30) Priorität: 14.10.1998 DE 19847307
(43) Veröffentlichungstag der Anmeldung: 08.08.2001
(73) Patentinhaber: Wilke, Hans-Joachim, 89160 Dornstadt-Bollingen (DE)
(72) Erfinder: Wilke, Hans-Joachim, 89160 Dornstadt-Bollingen (DE)
(74) Vertreter: Pfenning, Meinig & Partner GbR
(86) Internationale Anmeldenummer: DE9903360
(87) Internationale Veröffentlichungsnummer: WO00021786

(56) Entgegenhaltungen:
- EP-A- 0 270 699
- DE-A- 4 116 836
- DE-C- 19 534 660
- FR-A- 2 692 209
- US-A- 3 712 666
- US-A- 4 560 199

## Beschreibung

Die Erfindung betrifft eine Sitzvorrichtung mit einer Sitzplatte und mit einer Rückenlehne. Bei einer solchen Sitzvorrichtung handelt es sich um einen Stuhl, einen Bürostuhl, einen Sessel, einen Sitz für ein Landfahrzeug wie einen Personenkraftwagen, einen Lastkraftwagen, ein Nutzfahrzeug, einen Eisenbahnwagen o.dgl., einen Sitz für ein Luftfahrzeug oder für ein Wasserfahrzeug o.dgl.

In den sechziger Jahren durchgeführte intradiskale in vivo Untersuchungen wurden in vielfältiger Weise dahingehend interpretiert, daß das Stehen besser sei als das Sitzen. Beim Sitzen soll eine möglichst aufrechte Stellung mit Hohlkreuz (=Lordose) eingenommen werden, ein Rundrücken (=Kyphose) soll vermieden werden - obwohl regelmäßig eine Kyphosen-Stellung bevorzugt wird. Mit der Empfehlung, aufrecht mit Hohlkreuz zu sitzen, d.h. eine Lordosen-Stellung einzunehmen, wird durch die Erzeugung der Lendenlordose das Stehen simuliert. Das wurde als die physiologische Sitzhaltung definiert.

Der Erfinder hat jedoch mit einer direkten in vivo Bandscheibendruckmessung festgestellt, daß die obigen Erkenntnisse nicht aufrechterhalten werden können. Das Sitzen ist nach diesen Erkenntnissen nicht belastender als das Stehen, wobei bereits früher publizierte Ergebnisse, die auf indirekten Meßmethoden beruhen, bestätigt werden. Im Sitzen kann der Druck in der Bandscheibe in der bislang verpönten lässigen Sitzhaltung, d.h. beim Sitzen mit Rundrücken, sogar auf die Hälfte reduziert werden. Diese verpönte lässige aber bequeme Sitzhaltung mit leichtem Rundrücken erzeugt eine deutlich geringere Belastung der Bandscheibe als die bislang empfohlene aufrechte Sitzposition mit Hohlkreuz, d.h. mit Lendenlordose.

Aus der US 4,560,199 (Oberbegriff von Anspruch 1) ist ein Sitz bekannt, der zwischen einer Lordosenstellung und einer Kyphosenstellung hin- und herbewegbar ist. Die Kyphosenstellung wird dabei in der Liegeposition des Sitzes und die Lordosenstellung in der Sitzposition des Sitzes eingenommen.

Durch vom Erfinder durchgeführte Studien hat sich gezeigt, daß eine wechselnde Druckbelastung in der Bandscheibe des Sitzbenutzers anzustreben ist, weil die Bandscheibe dann Dank ihres "Schwammprinzips" ernährt werden kann.

In Kenntnis dieser Gegebenheiten liegt der Erfindung die Aufgabe zugrunde, eine Sitzvorrichtung der eingangs genannten Art zu schaffen, mit welcher es möglich ist, die Bandscheibe des Sitzbenutzers dank dieses Schwammprinzips ernähren zu können.

Diese Aufgabe wird bei einer Sitzvorrichtung der eingangs genannten Art erfindungsgemäß dadurch gelöst, daß die Rückenlehne zwischen einer Lordosenstellung und einer Kyphosenstellung, mittels einer Antriebseinrichtung hin- und herverstellbar ist. Dabei sollte auf eine gleichmäßige Lendenunterstützung des jeweiligen Sitzbenutzers geachtet werden.

Gängige Lehrmeinung ist, daß bei Flexion sich die Bandscheibe nach hinten wölbt. In vivo Untersuchungen des Erfinders haben gezeigt, daß diese Lehrmeinung falsch ist. Das Gegenteil ist der Fall. Bei Kyphose, d.h. im Rundrücken, wirken Kompressionskräfte auf dem vorderen Annulus (anteriorer Annulus). Diese Kompressionskräfte bewirken ein Ausbauchen nach vorne. Gleichzeitig entsteht eine Zugbeanspruchung im hinteren Faserring (posteriorer Annulus). Das bewirkt ein Strecken der Kollagenfasern und somit ein geringeres Ausbauchen. Dieses kann eindrücklich mit Hilfe einer Kontrastmittel-Röntgenaufnahme des Rückenmarkkanals (Myelographie) gezeigt werden. Experimentell wurde zwar gezeigt, daß bei Flexion der Kern nach hinten verlagert wird, diese Verlagerung ist allerdings viel geringer als bislang berichtet worden ist. Gleichzeitig geht der hintere Anteil des äußeren Bandscheibenringes eher leicht nach innen. Eine leichte Veränderung ist zu beobachten, wenn der Kern in der Bandscheibe aufgrund eines Bandscheibenvorfalles oder aufgrund einer Operation fehlt. Der äußere Faserring verhält sich jedoch ähnlich.

Die Diffusion von gelösten Stoffen kann in der aufrechten Haltung,d.h. in der Lordosenstellung, leichter in die vordere Hälfte der Bandscheibe als in ihre hintere Hälfte erfolgen. Dieses Ungleichgewicht ist in der flektierten Haltung umgekehrt. In der Kyphosenstellung ist die Diffusion insgesamt stärker, im hinteren Teil der Bandscheibe sogar wesentlich stärker als bei aufrechter Haltung.

Bei einem Nachhintenbeugen, d.h. bei starker Lordose, kommt es zur verstärkten Flächenpressung auf die Wirbelgelenke. Diese Flächenpressung wird durch das Kriechen der Bandscheibe im Laufe eines Tages weiter verstärkt. Die Kompressionskräfte steigen ferner auf dem hinteren Anteil des Bandscheibenfaserringes und zwischen den Dornfortsätzen. Eine ständige Hyperlordose wirkt als Initialreiz zu einer Arthrose in den kleinen Wirbelgelenken. Die ständige Hyperlordose führt zu dem schmerzhaften Bild eines Bastrup-Syndroms. Eine fixierte Lordosenstellung führt auf die Dauer zu einer verkürzten Muskulatur.

Aus den oben genannten Vor- und Nachteilen folgt, daß es keine optimale Wirbelsäulenkrümmung gibt, wenn sie statisch eingenommen wird. Das ist auch der Grund, warum beim Sitzen unbewußt ständig die Sitzposition gewechselt wird, wenn dies bei der entsprechenden Tätigkeit bzw. wenn dies durch die Sitzvorrichtung ermöglicht wird. Das bedeutet auch, daß von einer Kyphosenstellung nicht grundsätzlich abzuraten ist, sondern daß diese im dynamischen Wechsel mit der Lordosenstellung eingenommen werden soll. Werden die Gewebe des Bewegungsapparates des Sitzbenutzers durch Bewegung und Belastung trainiert, so erhalten sie die mechanischen Reize, die sie benötigen, um ihre Struktur aufrechtzuerhalten. Eine Mehrbelastung bewirkt bei Knochen und Muskulatur eine Massenzunahme und verbessert ihre biomechanischen Eigenschaften. Außerdem reagieren die Zellen dieser Gewebe mit eine verstärkten Zellvermehrung und mit einer erhöhten Stoffwechselaktivität.

Die Ernährung von Knorpel und Bandscheiben erfolgt durch Diffusion, die durch eine solche wechselnde Belastung stark begünstigt wird. Bei hoher Belastung wird die Flüssigkeit aus den entsprechenden Geweben herausgepreßt, wobei verbrauchte Stoffwechselprodukte mitgenommen werden. Danach können sich die Gewebe im entlasteten Zustand mit Flüssigkeit und Nährstoffen wie ein Schwamm wieder vollsaugen. Fehlt die besagte dynamische wechselnde Belastung, so werden die Knorpel und Bandscheiben nicht mehr ausreichend ernährt und reagieren mit einer Degeneration. Daraus folgt, daß die Bandscheibe des Sitzbenutzers beim Sitzen wechselnd belastet und vielfältig bewegt werden sollte. Das ist durch die erfindungsgemäße Sitzvorrichtung möglich, bei welcher die Rückenlehne zweckmäßigerweise oszillierend zwischen einer Lordosenstellung und einer Kyphosenstellung hin- und herverstellbar ist.

Als vorteilhaft hat es sich bei der erfindungsgemäßen Sitzvorrichtung erwiesen, wenn die Amplitude und/oder die Frequenz der oszillierenden Verstellung zwischen der Lordosenstellung und der Kyphosenstellung einstellbar ist. Amplitudengemäß kann der Bereich zwischen den beiden Extremstellungen z.B. bis 120 zwischen der unteren Deckplatte des Lendenwirbels L1 und der oberen Deckplatte des Sakrum S1 betragen- Die Frequenz der oszillierenden Verstellung zwischen der Lordosen- und der Kyphosenstellung kann beispielsweise im Bereich zwischen größenordnungsmäßig 0,5 sek⁻¹ bis ca. 1 h⁻¹ betragen.

Bei der erfindungsgemäßen Sitzvorrichtung kann die dynamische oszillierende Verstellung zwischen der Lordosenstellung und der Kyphosenstellung mittels einer Antriebseinrichtung passiv erfolgen.

Die Sitzvorrichtung besitzt eine Antriebseinrichtung, mit deren Hilfe die Rückenlehne kontinuierlich dynamisch oszillierend zwischen einer Lordosen- und einer Kyphosenstellung hin- und herverstellt wird. Bei dieser Antriebseinrichtung kann es sich beispielsweise um einen Elektromotor, um einen Hydraulikmotor o.dgl. handeln. Die Veränderung zwischen Lordosen- und Kyphosenstellung der Rückenlehne kann auch über entsprechende, mittels eines Fluids (Luft, Flüssigkeit etc.) unterschiedlich stark füllbare bzw. aufblasbare Hohlräume im Bereich der Rückenlehne erfolgen.

Bevorzugt ist es, wenn bei der erfindungsgemäßen Sitzvorrichtung die Rückenlehne nicht nur oszillierend zwischen einer Lordosen- und einer Kyphosenstellung hin- und herverstellbar ist, sondern wenn die Rückenlehne außerdem in ihrer Neigung verstellbar ist. Desweiteren kann die Lordosen- und Kyphoseneinstellung von der Rückenlehnenneigung unabhängig oder vorzugsweise abhängig einstellbar sein. Desweiteren kann es bevorzugt sein, wenn bei der erfindungsgemäßen Sitzvorrichtung die Sitzplatte in ihrer Neigung verstellbar und wenn die Lordosen- und Kyphoseneinstellung von der Sitzplattenneigung unabhängig oder vorzugsweise abhängig einstellbar ist. Durch derartige Ausbildungen der zuletzt genannten Art werden alle relevanten Strukturen des Sitzbenutzers wie Knorpel, Bandscheibe, Knochen, Bänder und Muskel beim Sitzen belastet und entlastet und somit trainiert. Das führt zu einer verbesserten Ernährung der Strukturen sowie zu einer verbesserten Atmung, Durchblutung und Verdauung und somit auch zu einer besseren Konzentration und einer höheren Effektivität. Das ist in allen Lebensbereichen von Vorteil.

Ein Ausführungsbeispiel der erfindungsgemäßen Sitzvorrichtung ist in der Zeichnung schematisch dargestellt und wird nachfolgend beschrieben. Es zeigen:
- Figur 1: eine Sitzvorrichtung in einer ersten Stellung,
- Figur 2: eine Sitzvorrichtung gemäß Figur 1 in einer zweiten Stellung,
- Figur 3: eine Sitzvorrichtung gemäß den Figuren 1 und 2 in einer dritten Stellung,
- Figur 4: die Sitzvorrichtung in einer vierten Stellung,
- Figur 5: zwei voneinander verschiedene Stellungen der Sitzvorrichtung entsprechend den Stellungen gemäß Figur 2 und Figur 3,
- Figur 6: zwei unterschiedliche Stellungen der Sitzvorrichtung entsprechend den Stellungen gemäß Figur 1 und Figur 4, und
- Figur 7: zwei unterschiedliche Stellungen der Sitzvorrichtung entsprechend den in den Figuren 2 und 4 gezeichneten Stellungen.

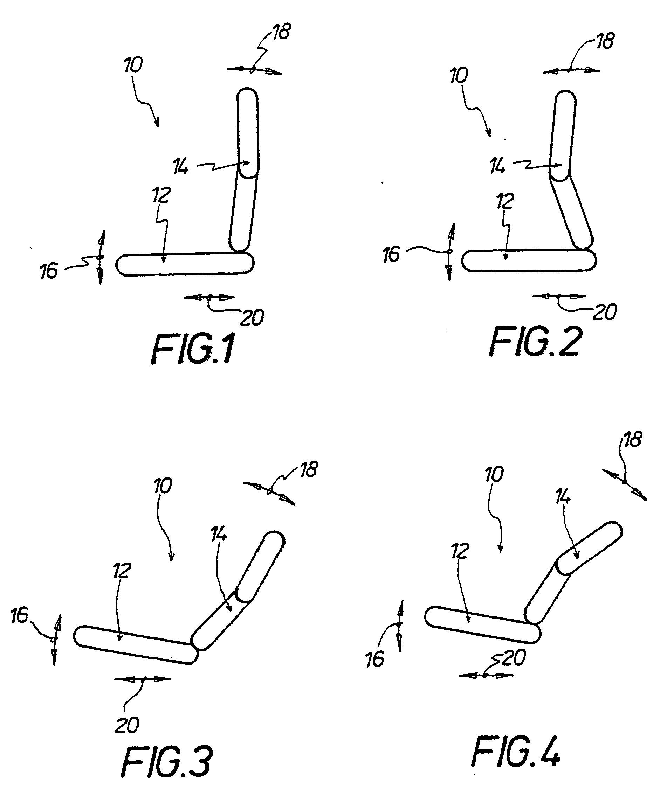

Figur 1 zeigt schematisch in einer Seitenansicht eine Ausbildung der Sitzvorrichtung 10 mit einer Sitzplatte 12 und mit einer Rückenlehne 14. Die Sitzplatte 12 kann in ihrer Neigung verstellbar sein. Das ist durch den bogenförmigen Pfeil 16 angedeutet. Die Rückenlehne 14 kann in ihrer Neigung verstellbar sein. Das ist durch den bogenförmigen Pfeil 18 verdeutlicht. Die Sitzplatte 12 kann außerdem in Sitzlängsrichtung verstellbar sein, was durch den Doppelpfeil 20 verdeutlicht ist.

In Figur 1 nimmt die Sitzvorrichtung 10 eine Stellung ein, in der die Sitzplatte 12 flach nach unten geneigt und die Rückenlehne 14 hochgestellt ist. Die Rückenlehne 14 nimmt eine aufrechte Kyphosenstellung ein. Demgegenüber nimmt die Rückenlehne 14 in Figur 2 eine aufrechte Lordosenstellung ein.

Gleiche Einzelheiten sind in Figur 2 mit denselben Bezugsziffern wie in Figur 1 bezeichnet, so daß es sich erübrigt, in Verbindung mit Figur 2 alle diese Einzelheiten noch einmal detailliert zu beschreiben.

Bei der Sitzvorrichtung 10 kann die Rückenlehne 14 kontinuierlich dynamisch oszillierend zwischen der in Figur 2 verdeutlichten Lordosenstellung und der in Figur 1 angedeuteten Kyphosenstellung hin- und herverstellbar sein. Diese Verstellung erfolgt durch eine geeignete (nicht dargestellte) Antriebseinrichtung. Diese Antriebseinrichtung kann ein integrales Bestandteil der Sitzeinrichtung 10 sein.

Figur 3 zeigt in einer den Figuren 1 und 2 ähnlichen schematischen Seitenansicht den Sitz 10, wobei die Sitzplatte 12 im Vergleich zu den in den Figuren 1 und 2 gezeichneten flachen Stellungen vorne hochgeschwenkt, d.h. in ihrer Neigung verändert ist, und wobei die Rückenlehne 14 in ihrer Neigung verstellt, d.h. nach hinten abgesenkt ist. Die Rückenlehne 14 nimmt - ähnlich wie in Figur 1 - eine Kyphosenstellung ein. Demgegenüber zeigt die Figur 4 die Sitzvorrichtung 10 mit vorne nach oben geneigter Sitzplatte und mit nach hinten geneigter Rückenlehne 14, wobei die Rückenlehne 14 - ähnlich wie in Figur 2 - eine Lordosenstellung einnimmt. Auch hier kann die Rückenlehne 14 kontinuierlich dynamisch zwischen der in Figur 4 verdeutlichten Lordosenstellung und der in Figur 3 verdeutlichten Kyphosenstellung hin- und herverstellbar sein.

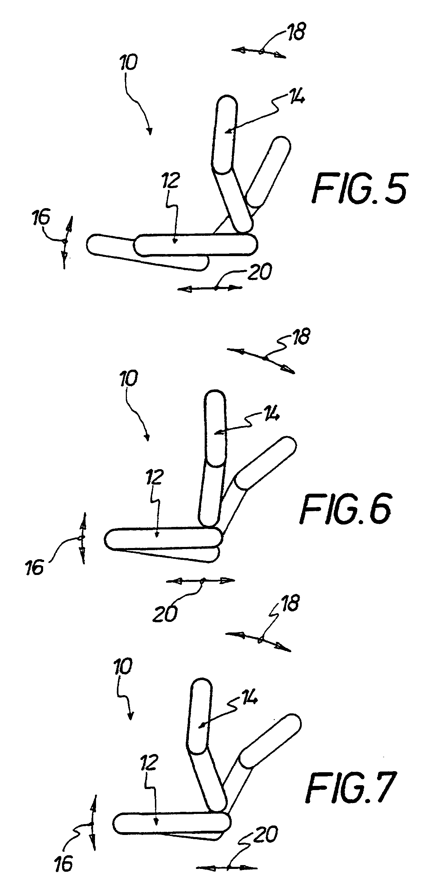

Die Figur 5 verdeutlicht eine kontinuierliche dynamisch oszillierende Verstellung der Sitzvorrichtung 10 zwischen der in Figur 2 und der in Figur 3 dargestellten Stellung, wobei diese Verstellung mit einer Längsverstellung der Sitzplatte 12 einhergeht. Demgegenüber verdeutlicht die Figur 6 eine dynamische Verstell-Variante, bei welcher die oszillierende Verstellung der Rückenlehne 14 zwischen der in Figur 1 und der in Figur 4 gezeichneten Stellung mit einer Neigungsverstellung der Sitzplatte ohne Längsverstellung derselben einhergeht.

Figur 7 verdeutlicht die dynamisch hin- und hergehende Verstellbarkeit der Sitzvorrichtung 10 zwischen der in Figur 2 und der in Figur 4 dargestellten Sitzposition. Selbstverständlich sind auch andere Varianten bzw. Kombinationen der Sitzverstellungen gemäß den Figuren 1 bis 4 möglich, um zwischen einer Lordosenstellung und einer Kyphosenstellung dynamisch oszillierend, d.h. hin- und hergehend zu variieren, wobei auf eine gleichmäßige Lendenunterstützung zu achten ist.

Gleiche Einzelheiten sind in den Figuren 1 bis 7 jeweils mit denselben Bezugsziffern bezeichnet, wobei darauf hingewiesen wird, daß die in Figur 7 verdeutlichte Variationsmöglichkeit der bisherigen Empfehlung für ein dynamisches Sitzen entspricht, weil hier die Rückenlehne 14 nicht zwischen einer Lordosen- und einer Kyphosenstellung verstellt wird, sondern nur die Rückenlehne 14 bei Beibehaltung der Lordosenstellung in ihrer Neigung verändert wird.

## Patentansprüche

1. Sitzvorrichtung mit einer Sitzplatte (12) und einer Rückenlehne (14), die eine Kyphosen- und eine Lordosenstellung einnehmen kann,
**dadurch gekennzeichnet,**
**daß** die Rückenlehne (14) Kontinuierlich dynamisch oszillierend zwischen der Lordosenstellung und der Kyphosenstellung mittels einer Antriebseinrichtung , wie z.B. einem Elektro- oder Hydraulikmotor oder dgl., hin- und herverstellbar ist.

2. Sitzvorrichtung nach Anspruch 1,
**dadurch gekennzeichnet,**
**daß** die Amplitude und/oder die Frequenz der Verstellung zwischen der Lordosen- und der Kyphosenstellung einstellbar ist.

3. Sitzvorrichtung nach mindestens einem der Ansprüche 1 bis 2,
**dadurch gekennzeichnet,**
**daß** die Rückenlehne (14) in ihrer Neigung verstellbar ist und daß die Lordosen- und Kyphosenstellung von der Rückenlehnenneigung abhängig einstellbar ist.

4. Sitzvorrichtung nach mindestens einem der Ansprüche 1 bis 2,
**dadurch gekennzeichnet,**
**daß** die Sitzplatte in ihrer Neigung verstellbar ist und daß die Lordosen- und Kyphosenstellung von der Sitzplattenneigung abhängig einstellbar ist.

## Claims

1. Seat comprising a seat plate (12) and a backrest (14) which can take up a kyphotic and a lordotic position, **characterised in that** the backrest is in a continuous dynamic oscillating manner adjustable to and fro between a lordotic and a kyphotic position by means of a drive, for example an electric or hydraulic motor or the like.

2. Seat according to Claim 1, **characterised in that** the amplitude and/or the frequency of adjustment between a lordotic and a kyphotic position is adjustable.

3. Seat according to at least one of Claims 1 to 2, **characterised in that** the backrest (14) is adjustable in its inclination, and the lordotic and kyphotic position is adjustable in dependence of the inclination of the backrest.

4. Seat according to at least one of Claims 1 to 2, **characterised in that** the inclination of the seat plate is adjustable and the lordotic and kyphotic position is adjustable in dependence of the seat plate inclination.

## Revendications

1. Siège comprenant une plaque de siège (12) et un dossier (14), qui peut adopter une position cyphotique et une position lordosique, **caractérisé en ce que** le dossier peut effectuer un mouvement oscillant dynamique continu en va-et-vient entre la position lordosique et la position cyphotique au moyen d'un dispositif d'entraînement, par exemple, un moteur électrique ou un moteur hydraulique, ou analogue.

2. Siège selon la revendication 1, **caractérisé en ce que** l'amplitude et/ou la fréquence du mouvement entre la position lordosique et la position cyphotique peut être réglé.

3. Siège selon au moins l'une quelconque des revendications 1 à 2, **caractérisé en ce que** l'inclinaison du dossier (14) peut être réglée et **en ce que** la position lordosique et la position cyphotique peuvent être réglées en fonction de l'inclinaison du dossier.

4. Siège selon au moins l'une quelconque des revendications 1 à 2, **caractérisé en ce que** l'inclinaison de la plaque de siège peut être réglée et **en ce que** la position lordosique et la position cyphotique peuvent être réglées en fonction de l'inclinaison de la plaque de siège.
